# EUROPÄISCHE PATENTANMELDUNG

(11) **EP 1 116 542 A2**
(43) Veröffentlichungstag der Anmeldung: **18.07.2001**
(21) Anmeldenummer: 00127417.4
(22) Anmeldetag: 14.12.2000
(51) Int. Cl.: B23H 7/08

(54) **Drahtelektrode für das funkenerosive Schneiden von Hartmetall**

(30) Priorität: 12.01.2000 DE 10000858
(71) Anmelder: Berkenhoff GmbH, 35452 Heuchelheim (DE)
(72) Erfinder: Baumann, Ingo, 35764 Sinn-Fleisbach (DE); Barthel, Bernd, 35745 Herborn-Merkenbach (DE)
(74) Vertreter: Missling, Arne, Dipl.-Ing.

(57) **Zusammenfassung**

Die Erfindung betrifft ein Verfahren und eine Drahtelektrode für das funkenerosive Schneiden von Hartmetall, wobei die Drahtelektrode einen Kern und zumindest eine den Kern umgebende und beim Schneiden verschleißende Mantelschicht aufweist. Zur Vermeidung von Korrosionserscheinungen, wie z. B. Lochfraß, wird eine Drahtelektrode ausgewählt, deren verschleißende Mantelschicht aus einem Metall oder einer Metall-Legierung besteht, welche nicht edler als das in dem Hartmetall enthaltene Bindemittel ist und dass das Metall oder die Metall-Legierung ein Elektrodenpotential aufweist, das kleiner oder gleich ist als ϕ₀ - 0,28 V, bezogen auf eine Standard-Wasserstoffelektrode.

## Beschreibung

Die Erfindung betrifft ein Verfahren sowie eine Drahtelektrode für das funkenerosive Schneiden von Hartmetall mit einem Kern und zumindest einer den Kern umgebenden und beim Schneiden verschleißenden Mantelschicht.

Mit dem Begriff Hartmetall wird eine Metall-Keramik-Verbindung, z.B. WC/Co-Verbindung, bezeichnet, die als charakteristische Eigenschaft eine große Härte und einen hohen Verschleißwiderstand, insbesondere bei hohen Temperaturen, aufweist. Das Hartmetall besteht aus Karbiden, die mit einem Bindemittel, z.B. Co, Ni, in einem Gefüge gehalten sind. Das Bindemittel kann bis zu 35 Gew.-% betragen. Das Bindemittel wird vor allem benötigt, um die keramische Komponente, die Karbide, zu zementieren und dem Hartmetall die nötige Zähigkeit bei mechanischen Belastungen zu verleihen. Die Karbide, die dem Hartmetall seine extreme Härte und Widerstandsfähigkeit geben, sind keramikähnliche Materialien; sie verfügen über einen hohen Korrosionswiderstand, sind aber sehr bruchempfindlich.

Für die Herstellung hochpräziser Werkzeuge oder Matrizen müssen Hartmetallblöcke mittels herkömmlicher Methoden, z.B. durch Schleifen oder Funkenerosion, bearbeitet werden. In jüngerer Zeit setzt sich dabei die Funkenerosion dank ihrer großen Präzision, ihrer Vielfältigkeit und ihrem hohen Automatisierungsgrad, verbunden mit vorteilhaften Produktionskosten, immer rascher durch.

Problematisch ist jedoch beim funkenerosiven Schneiden von Hartmetall, dass u.a. an den nicht erodierten Oberflächen des Hartmetallblockes Lochfraß-Erscheinungen auftreten. Diese Lochfraß-Erscheinungen bestehen in vielen kleinen Löchern auf oder unmittelbar unter der Oberfläche des Hartmetallblockes. Diese Lochfraß-Erscheinungen sind nicht immer mit bloßem Auge erkennbar, und die Oberfläche des Hartmetallblockes kann äußerlich völlig unversehrt aussehen. Sobald jedoch die fragliche Stelle einer Verschleißbelastung ausgesetzt wird, treten die vorher abgedeckten Löcher zum Vorschein. Die Löcher entstehen durch die Korrosion von Hartmetall. Dabei handelt es sich um einen elektrochemischen Vorgang, der die gesamte Oberfläche des im wässrigen Dielektrikums eingetauchten Blockes angreift. Die Korrosion verursacht ein Auswaschen der metallischen Phase des Hartmetalls, verbunden mit einer Freisetzung von dem in dem Hartmetall enthaltenen Metall im Dielektrikum.

Die elektrochemische Korrosion von Hartmetallen äußert sich in einer von der Oberfläche ausgehenden Zerstörung des Hartmetallgefüges. Sie beruht auf einer Auflösung des in dem Hartmetall enthaltenen Bindemittels und ggf. weiterer Metalle. Ursache ist hierbei die Anwesenheit eines zweiten, edleren Metalls, dessen Standard-Elektrodenpotential also höher ist als das des korrodierenden Metalls des Hartmetalles. Die elektrochemische Korrosion findet dabei an der Anode einer elektrochemischen Korrosionszelle statt und erfolgt in Gegenwart eines Elektrolyten (Dielektrikums). Diese Bedingungen sind beim funkenerosiven Schneiden von Hartmetall gegeben.

Der Erfindung liegt die Aufgabe zugrunde, eine Drahtelektrode vorzuschlagen, mit welcher die Korrosion, insbesondere der nicht erodierten Flächen des Hartmetallblockes verhindert wird.

Diese Aufgabe wird erfindungsgemäß dadurch gelöst, dass zum funkenerosiven Schneiden von Hartmetall eine Drahtelektrode ausgewählt wird, deren verschleißende Mantelschicht aus einem Metall oder einer Metall-Legierung besteht, welche nicht edler als das in dem Hartmetall enthaltene Bindemittel ist und dass das Metall oder die Metall-Legierung ein Elektrodenpotential aufweist, das kleiner oder gleich ϕ₀- 0,28 V ist, bezogen auf eine Standard-Wasserstoffelektrode. So lösen sich zwar während des Schneidens durch den Verschleiß der Mantelschicht der Drahtelektrode Metallteilchen der Mantelschicht ab und verbleiben in dem Dielektrikum. Da diese Metallteilchen jedoch nicht edler als das in dem Hartmetall enthaltene Metall sind, kann es, sobald die Metallteilchen mit dem Hartmetallblock in Kontakt treten, daher nicht zu der elektrochemischen Korrosion, d.h. zum Lochfraß des Hartmetalles kommen. Folglich werden auch die Lochfraß-Erscheinungen in dem Hartmetallblock vermieden.

In der Regel enthält der Hartmetallblock als Bindemittel Kobalt. Kobalt hat ein Elektrodenpotential von ca. ϕ₀ = - 0,28 V, bezogen auf eine Standard-Wasserstoffelektrode. Das in der verschleißenden Mantelschicht enthaltene Metall oder die in der verschleißenden Mantelschicht enthaltenen Metall-Legierungen haben also vorteilhaft ein Elektrodenpotential, welches kleiner oder gleich ϕ₀ = - 0,28 V ist. Dabei kann es sich somit z.B. um Aluminium, Magnesium, Zink oder Eisen handeln.

Der Kern der Drahtelektrode gemäß der Erfindung kann aus einer Kupfer-Legierung oder aus Kupfer bestehen. Auf einen derartigen Kern ist eine zumindest zum Teil verschleißende Mantelschicht aus Stahl aufgebracht. Erfindungsgemäß kann auf diese Stahlschicht eine Zinkschicht aufgetragen sein. Eine derartige Drahtelektrode ist so einzusetzen, dass nur die Mantelschichten, nicht jedoch der Kern verschleißt.

## Patentansprüche

1. Drahtelektrode für das funkenerosive Schneiden von Hartmetall mit einem Kern und zumindest einer den Kern umgebenden und beim Schneiden verschleißenden Mantelschicht,
**dadurch gekennzeichnet,** dass die verschleißende Mantelschicht aus einem Metall oder aus einer Metall-Legierung besteht, welche nicht edler als das in dem Hartmetall enthaltene Bindemittel ist, und dass das Metall oder die Metall-Legierung ein Elektrodenpotential aufweist, das kleiner oder gleich ist als ϕo-0,28 V ist, bezogen auf eine Standard-Wasserstoffelektrode.

2. Drahtelektrode nach Anspruch 1, dadurch gekennzeichnet, dass der Kern aus Kupfer oder einer Kupfer-Legierung besteht, die mit einer Mantelschicht aus Eisen oder einer Eisen-Legierung bedeckt ist.

3. Drahtelektrode nach Anspruch 2, dadurch gekennzeichnet, dass auf der Drahtelektrode eine weitere äußere verschleißende Mantelschicht aus Zink oder Zink-Legierung aufgebracht ist.

4. Verfahren zum funkenerosiven Schneiden von Hartmetall mittels einer Drahtelektrode, die einen Kern und zumindest eine den Kern umgebende und beim Schneiden verschleißende Mantelschicht aufweist,
**dadurch gekennzeichnet,** dass eine Drahtelektrode ausgewählt wird, deren verschleißende Mantelschicht aus einem Metall oder einer Metall-Legierung besteht, welche nicht edler als das in dem Hartmetall enthaltene Bindemittel ist und dass das Metall oder die Metall-Legierung ein Elektrodenpotential aufweist, das kleiner oder gleich ϕo-0,28 V ist, bezogen auf eine Standard-Wasserstoffelektrode.
